# EUROPEAN PATENT APPLICATION

(11) **EP 1 110 845 A1**
(43) Date of publication of application: **27.06.2001**
(21) Application number: 00310978.2
(22) Date of filing: 08.12.2000
(51) Int. Cl.: B62D 5/04

(54) **Automotive vehicle steering system**

(30) Priority: 21.12.1999 US 468153
(71) Applicant: Ford Global Technologies, Inc., Dearborn, Michigan 48126 (US)
(72) Inventor: Andonian, Brian James, Livonia, Michigan 48150 (US); Liubakka, Michael Kenneth, Canton, Michigan 48188 (US); Stout, Gregory James, Ann Arbor, Michigan 48108 (US)
(74) Representative: Messulam, Alec Moses

(57) **Abstract**

An automotive vehicle steering system has an actuator (26) disposed between steered wheels (12, 14) on opposite sides of the vehicle. A shaft (28) passes axially through the interior of a housing (40) of the actuator and through a rotor tube (56) journaled for rotation within the housing. On the exterior of the housing one end of the shaft is coupled to one wheel and the other end to the other wheel by respective tie rods (30, 32). An electric motor (52) within the interior of the housing rotates the rotor tube when the wheels are steered by a steering wheel. An internal screw thread (68) on the rotor tube and an external screw thread (70) on the shaft are operatively coupled by a set of transmission rollers (76) to provide for bi-directional transmission of motion between the rotor tube and the shaft such that rotation of the rotor tube causes the shaft to move axially of the housing to steer the vehicle wheels and axial motion of the shaft due to wheel recovery from a turn rotates the rotor tube.

## Description

This invention relates generally to automotive vehicle steering systems, and more particularly to a steering system that includes an electric actuator having a shaft that translates linearly to turn wheels on opposite sides of a vehicle in unison.

A preliminary novelty search in connection within this invention developed various U.S. Patents that are identified on an attachment to an accompanying Information Disclosure Statement. Also identified on that attachment are two U.S. Patents relating to electric motor powered linear actuators.

The state of the art shows that it is known to utilise an electric powered actuator in an automotive vehicle steering system to aid in turning steered wheels on opposite sides of a vehicle, such as right and left front wheels of a four wheeled vehicle. The steered wheels are turned by a steering wheel that is coupled through a steering column shaft to a pinion of a mechanical steering gear that imparts linear motion to a steering rack that is coupled to the steered wheels. As the steering wheel is turned, a shaft of the electric powered actuator translates linearly to aid the motion of the rack by supplying a major share of the force that turns the wheels. This type of system is referred to by various names such as electrically assisted steering or electric power steering.

The state of the art also reveals another type of steering system, one in which a steering wheel is not mechanically coupled to the steered wheels, but rather is electrically coupled by wires to an electric actuator for turning the wheels. Such a steering system lacks a steering column shaft that is coupled to the wheels through a mechanical steering gear that operates a rack. This type of system is sometimes referred to as a steer-by-wire system.

The right and left steered wheels of a vehicle impose certain requirements on linear force that the shaft of an electric actuator must exert in order to turn them. The mechanism of one type of electric actuator that is suitable for use in a steering system of either one of the two types described above converts electric energy into rotational motion and the rotational motion into linear motion for translating the actuator shaft. The force imposed by the wheels on the shaft is therefore reflected as torque load imposed on a rotary portion of the actuator.

The present invention relates to vehicle steering systems of the foregoing types in which the electric actuator has a construction that is believed to endow the system with improved torque transmission and/or torque-to-force conversion characteristics, especially in regard to bi-directional motion characteristics. Such improvements may provide expanded use of such systems to a wider range of vehicles, especially a wider range of vehicle sizes. More widespread use of such an improved system may yield favourable cost benefits to a manufacturer who mass produces automotive vehicle steering systems.

One generic aspect of the invention relates to an automotive vehicle comprising a right steered wheel, a left steered wheel, and a steering mechanism for steering the steered wheels in unison to steer the vehicle. The steering mechanism comprises a housing that is disposed between the steered wheels and that comprises an interior enclosed by an axially extending side wall having opposite axial ends. A shaft that has a longitudinal axis passes axially through the interior of the housing between opposite axial ends of the housing and has opposite axial ends that are exterior to the interior of the housing. An electric motor comprises a rotor disposed within the interior of the housing for rotation about an axis that is coaxial with the shaft axis. The rotor comprises a cylindrical rotor tube which is open at opposite axial ends, through which the shaft coaxially passes, and which is rotatable about the coaxis of the shaft and rotor. The motor further comprises a stator for operating the rotor to rotate the rotor tube. There is an internal screw thread on the rotor tube, and an external screw thread on the shaft. A set of transmission rollers operatively couple the internal screw thread and the external screw thread to provide for bi-directional motion transmission between the rotor tube and the shaft such that rotation of the rotor tube causes the shaft to move axially of the housing and axial motion of the shaft causes rotation of the rotor tube. A right steering coupling couples one end of the shaft to the right steered wheel, and a left steering coupling couples the other end of the shaft to the left steered wheel.

Another generic aspect relates to an automotive vehicle comprising a right steered wheel, a left steered wheel, and a steering mechanism for steering the steered wheels in unison to steer the vehicle. The steering mechanism comprises a housing that is disposed between the steered wheels and that comprises an interior enclosed by an axially extending side wall having opposite axial ends. A shaft that has a longitudinal axis passes axially through the interior of the housing between opposite axial ends of the housing and has opposite axial ends that are exterior to the interior of the housing. An electric motor comprises a rotor that is disposed within the interior of the housing for rotation about an axis that is coaxial with the shaft axis. The rotor comprises a cylindrical rotor tube which is open at opposite axial ends, through which the shaft coaxially passes, and which is rotatable about the coaxis of the shaft and rotor. The motor further comprises a stator for operating the rotor to rotate the rotor tube. There is an internal formation on the rotor tube, and an external formation on the shaft. A set of elements operatively couple the internal and the external formations to provide for bi-directional motion transmission between the rotor tube and the shaft such that rotation of the rotor tube causes the shaft to move axially of the housing and axial motion of the shaft causes rotation of the rotor tube.

Individual elements of the set are disposed circumferentially spaced apart about the coaxis of the shaft and rotor tube with individual elements meshing with both the internal formation and the external formation and with the elements planetating about the coaxis as they transmit motion between the two formations. A right steering coupling couples one end of the shaft to the right steered wheel, and a left steering coupling couples the other end of the shaft to the left steered wheel.

The present invention will now be described further, by way of example, with reference to the accompanying drawings, in which:
Fig. 1 is a representative front view, somewhat schematic, of an automotive vehicle including one type of steering system embodying principles of the invention;
Fig. 2 is a representative front view, somewhat schematic, of an automotive vehicle including another type of steering system embodying principles of the invention;
Fig. 3 is a cross section view on an enlarged scale in the direction of arrows 3-3 in Figure 1;
Fig. 4 is an enlarged view of a portion of Figure 3;
Fig. 5 is an enlarged view of a portion of Figure 4; and
Fig. 6 is a transverse cross section view in the direction of arrows 6-6 in Figure 4.

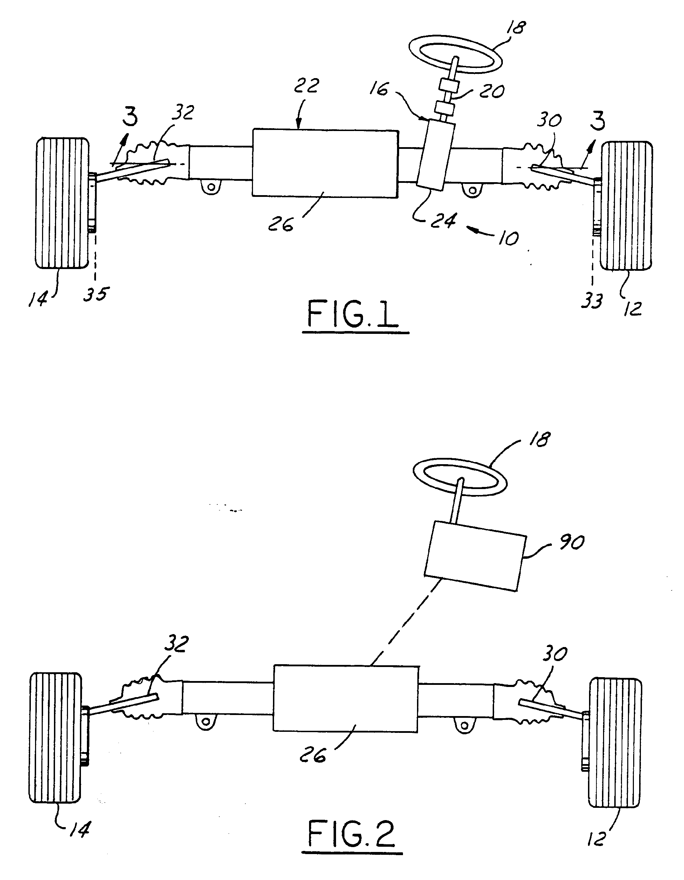

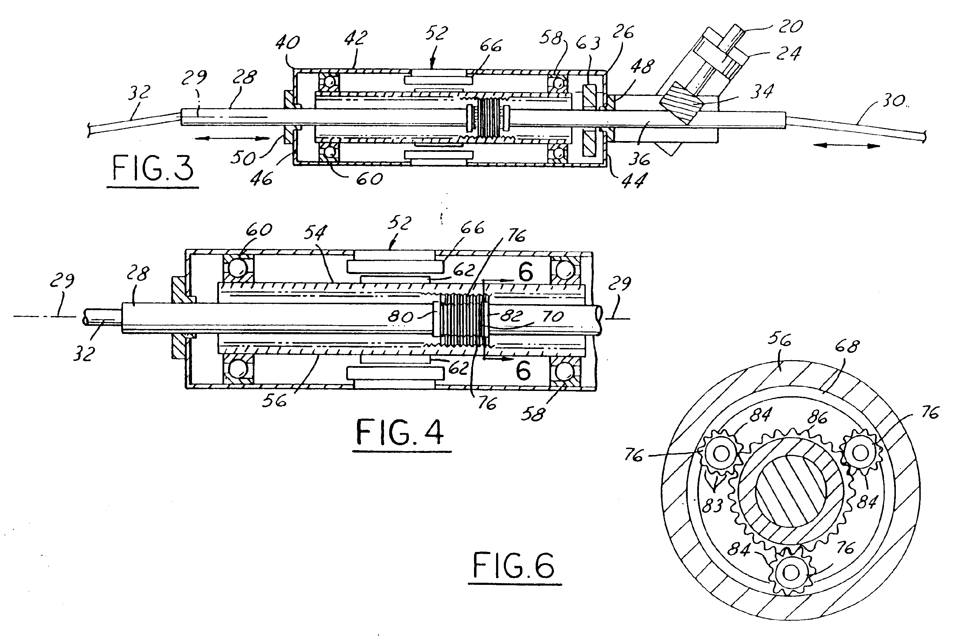

Figure 1 shows a portion of an automotive vehicle 10 comprising a chassis having a pair of steerable wheels 12 and 14 on opposite sides of the vehicle. Wheel 12, on the right side of Figure 1, is the left front wheel of the vehicle, and wheel 14 on the left in Figure 1, the right front wheel of the vehicle. A steering system 16 for turning wheels 12, 14 to steer vehicle 10 comprises a steering wheel 18, a steering column shaft 20, and a steering mechanism marked by the general reference numeral 22. Steering mechanism 22 is disposed generally between wheels 12 and 14 and comprises a steering gear 24 and an actuator 26. Further detail is present in Figures 3-6.

A shaft 28 having a longitudinal axis 29 is common to both steering gear 24 and actuator 26. A coupling 30 couples one end of shaft 28 to left wheel 12, and a coupling 32 couples the other end of shaft 28 to right wheel 14. The couplings may, for example, be tie rods having ball joints. Wheels 12, 14 are mounted for rotation on respective wheel spindles via wheel bearings (not shown). Wheel suspensions and brakes (also not shown) are associated with the wheels. Each spindle is mounted for turning about a respective turning axis 33, 35 that is generally vertical, but may be canted from true vertical for reasons related to various steering and suspension considerations that do not bear directly on the present invention. The spindles include respective steering knuckles (not shown) to which couplings 30, 32 attach. Linear motion imparted to shaft 28 along its axis 29 is effective to turn the spindles, and hence wheels 12 and 14, in unison about the respective spindle turning axes 33, 35, thereby steering the vehicle.

Steering gear 24 comprises a pinion gear 34 that is turned by turning steering wheel 18. Pinion gear operates a rack 36 on a portion of shaft 28 such that when turned by steering wheel 18, pinion gear 34 imparts linear translation to shaft 28 along axis 29. Turning steering wheel 18 in one sense displaces shaft 28 in one direction along axis 29, and turning it in the opposite sense displaces shaft 28 in the opposite direction. Because steering gear 24 comprises a housing that is affixed to the vehicle chassis, shaft 28 is displaced through that housing as steering wheel 18 turns. In a vehicle where shaft 28 is rearward of the steering axes 33, 35, displacement of shaft 28 to the left in Figure 3, it pushes on the steering knuckle for right wheel 14 and pulls on the steering knuckle for left wheel 12 to steer wheels 12, 14 in a left direction referenced to vehicle forward travel. When shaft 28 is displaced to the right in Figure 3, it pushes on the steering knuckle for left wheel 12 and pulls on the steering knuckle for right wheel 14, steering wheels 12, 14 in a right direction referenced to vehicle forward travel.

Actuator 26 comprises a housing 40 having an axially extending cylindrical side wall 42 that encloses an interior. Shaft 28 passes axially through the housing interior between opposite axial ends of side wall 42. At its respective axial ends, housing 42 comprises respective end walls 44, 46 that close opposite ends of the housing interior. Shaft 28 passes through openings in end walls 44, 46. The openings include respective seals 48, 50 that allow shaft motion through the openings while sealing the interior of the housing from the exterior to resist intrusion of outside contaminants into the housing interior.

An electric motor 52 is housed within housing 40 and comprises a rotor 54 disposed within the housing interior for rotation about an axis that is coaxial with the shaft axis 29. Rotor 54 comprises a cylindrical rotor tube 56 which is open at opposite axial ends and through which shaft 28 coaxially passes. Bearing assemblies 58, 60 journal opposite end portions of rotor tube 56 on the interior of housing 40 to make the rotor tube rotatable about the coaxis 29 of shaft 28 and rotor 54. An intermediate portion of rotor tube 56 contains a motor armature comprising permanent magnets 62. Motor 52 further comprises a stator 64 for operating rotor 54 to rotate rotor tube 56. Stator 64 may comprise an electric motor winding 66 that is energised by a motor circuit to create a rotating magnetic field that interacts with magnets 62 to impart torque to rotor tube 56. The motor circuit could be disposed in a module mounted either on housing 40 or at a location remote from housing 40. In either case appropriate wiring must be brought to motor 52. Because actuator 26 augments force exerted on shaft 28 by steering gear 24 to turn wheels 12, 14, torque input to the steering gear may be sensed by a torque sensor 63 and provided as an electric signal input to the motor circuit for enabling the motor circuit to deliver appropriate electric current to motor 52. The motor control circuit may use feedback from a position sensor 65 that is disposed in any suitably appropriate manner to sense position of shaft 28 along axis 29 relative to housing 40.

Although rotor tube 56 is journaled for rotation, it is constrained against axial motion along axis 29. An internal screw thread 68, that is helical about axis 29, is disposed on the interior of rotor tube 56. The screw thread may be either cut into the wall of the rotor tube, or contained in a separate part that is assembled to the rotor tube. An external screw thread 70, that is also helical and concentric with axis 29, is disposed on shaft 28. Screw thread 70 is contained in a separate part 72 that is assembled onto shaft 28. Each screw thread 68, 70 has the same number of threads per inch (thread per centimetre in metric units); however, because they have different pitch diameters, the two threads are not precisely identical.

The basic major diameter of screw thread 70 as measured across an imaginary cylinder defined by the crest of the thread flanks is smaller than the basic major diameter of screw thread 68, similarly measured, to provide a circular annular space for accommodating a set 74 of transmission rollers 76. Transmission rollers 76 operatively couple screw thread 68 and screw thread 70 so as to provide for bi-directional transmission of motion between rotor tube 56 and shaft 28 such that rotation of rotor tube 56 causes shaft 28 to translate axially of housing 14 and axial translation of the shaft relative to the housing causes rotation of the rotor tube. While the drawings show several transmission rollers not necessarily in true positions for illustrative purposes only, it should be understood that the specific number of transmission rollers employed in any given actuator may depend on the particular design specification. In an example of one embodiment, seven transmission rollers 76 centred at equal intervals about axis 29 are present. The transmission rollers may be like those disclosed in certain embodiments of U.S. Patent Nos. 5,491,372 and 5,557,154.

Each transmission roller 76 comprises a helical screw thread 78 which acts in a manner which is capable of transmitting motion bi-directionally between shaft 28 and rotor tube 56 as described above. Thread 78 has the same number of threads per inch, or per centimetre, as threads 68, 70. But because the basic major diameter of thread 78 is much smaller than that of either thread 68 or 70, its helix angle is noticeably greater than the helix angle of either thread 68 or 70. At any given time, a limited extent, as measured circumferentially about the respective transmission roller axis, of each of a number of convolutions of the helical thread of each respective transmission roller 76 is meshing with a limited extent, measured about axis 29, of a respective convolution of the helical screw thread 68 while a substantially diametrically opposite limited extent of each such transmission roller convolution is meshing with a limited circumferential extent of a respective convolution of helical screw thread 70. When sufficient torque is developed by motor 52 to rotate rotor tube 56, screw thread 68 of the latter acts via transmission rollers 76 to translate shaft 28. If sufficient force is applied to shaft 28 along axis 29, such as when wheel 10 is recovering from a right or left turn, screw thread 70 acts via transmission rollers 76 to rotate rotor tube 56. It is believed that the difference between the helix angle of the thread of transmission rollers 76 and that of screw thread 68 on the one hand and the difference between the helix angle of the thread of transmission rollers 76 and that of screw thread 70 on the other hand provide interfaces that endow the actuator with its bi-directional motion transmission capabilities.

Transmission rollers 76 are maintained in set 74 by journaling their ends in holes in support rings 80, 82 that fit over and are affixed to shaft 28 at opposite ends of the transmission rollers. Opposite end convolutions of each transmission roller's screw thread 78 are machined to create short axial grooves 83 that are mutually parallel and equally spaced about the transmission roller axis to form what is equivalent to integral pinions 84 at opposite ends of each transmission roller. The pinion 84 proximate support ring 80 meshes with a pinion 86 provided around the perimeter of shaft 28 proximate one end of screw thread 70, and the pinion 84 proximate support ring 82 meshes with a pinion 86 provided around the perimeter of shaft 28 proximate the opposite end of screw thread 70. The interaction between the transmission roller pinions 84 and pinions 86 is believed to impart a beneficial turning of each transmission roller as the actuator operates, thereby planetating the transmission rollers. Such turning is believed to impart a rolling interaction between each flank of the transmission roller screw thread and a respective flank of each of screw threads 68 and 70 with which it is interacting. This rolling interaction is believed helpful in eliminating, or at least minimising, skidding between the transmission roller screw thread flanks and the flanks of screw threads 68 and 70.

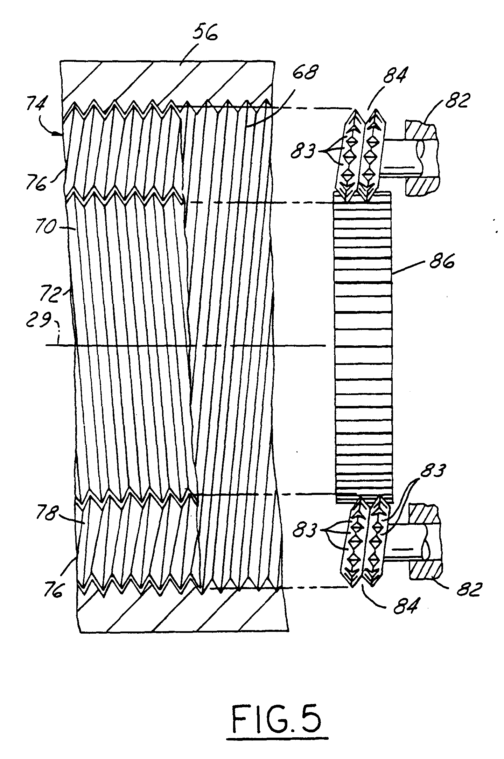

Because of illustrative considerations, Figure 5 contains some apparent distortion of the screw threads. It shows each transmission roller screw thread to comprise a single continuous helix, but each screw thread 68, 70 may appear to be other than a single continuous helix. It should be understood that each screw thread 68, 70 of the disclosed preferred embodiment is in fact a single continuous helix, and furthermore that the helix of each screw thread 68, 70 advances in the same direction. The helices of screw threads 68 and 70 are phased such that an imaginary line that is radial to axis 29 and intersects the root of screw thread 68 will intersect the crest of screw thread 70. For any of screw threads 68, 70, and 78, a fragmentary cross section through a convolution of the thread that is perpendicular to the respective helix will show that the thread flanks are substantially symmetrical about the root of the thread. The crests and roots may also be somewhat rounded.

Although shaft 28 has been described as being common to both steering gear 24 and actuator 26, it should not be construed to necessarily be one piece because it could be constructed of multiple sections attached together. For example one section could be a part of steering gear 24, and another, a part of actuator 26.

Figure 2 shows a second type of steering system that lacks direct mechanical coupling of wheels 12, 14 to steering wheel 18 via a steering column shaft 20 and a steering gear 24. Steering mechanism 22 remains disposed generally between wheels 12 and 14 and comprises actuator 26 coupled by couplings 30, 32 to wheels 12, 14. Motion of steering wheel 18 is transmitted by wires from an electric transmitter 90 associated with the steering wheel to an electric controller that may be housed within a module on housing 40. In response to signals from transmitter 90, the controller creates proper electric current in motor 52 to cause shaft 28 to translate to a position corresponding to the extent to which steering wheel 18 is turned. Other details of actuator 26 and its manner of operation are like those already described for the steering system of Figure 1, with corresponding elements being indicated by the same reference numeral previously used. Further detailed description of actuator 26 of Figure 2 would be duplicative of previous description and is therefore omitted.

## Claims

1. An automotive vehicle steering system comprising:
a right steered wheel (12), a left steered wheel (14), and a steering mechanism (22) for steering the steered wheels (12,14) in unison to steer the vehicle;
the steering mechanism (22) comprising:
a housing (40) that is disposed between the steered wheels (12,14) and that comprises an interior enclosed by an axially extending side wall (42) having opposite axial ends;
a shaft (28) that has a longitudinal axis, that passes axially through the interior of the housing (40) between opposite axial ends of the housing, and that has opposite axial ends that are exterior to the interior of the housing;
an electric motor (52) comprising a rotor (54) that is disposed within the interior of the housing (40) for rotation about an axis that is coaxial with the shaft axis, the rotor (54) comprising a cylindrical rotor tube (56) which is open at opposite axial ends, through which the shaft (28) coaxially passes, and which is rotatable about the coaxis of the shaft (28) and rotor, the motor further comprising a stator for operating the rotor to rotate the rotor tube (56) ;
an internal screw thread (68) on the rotor tube (56) ;
an external screw thread (70) on the shaft (28) ;
a set of transmission rollers (76) operatively coupling the internal screw thread (68) and the external screw thread (70) to provide for bi-directional transmission of motion between the rotor tube (56) and the shaft (28) such that rotation of the rotor tube (56) causes the shaft (28) to move axially of the housing (40) and axial motion of the shaft (28) causes rotation of the rotor tube (56) ;
a right steering coupling (30) that couples one end of the shaft (28) to the right steered wheel (12) ; and
a left steering coupling (32) that couples the other end of the shaft (28) to the left steered wheel (14).

2. An automotive vehicle steering system as claimed in claim 1 including support rings disposed on the shaft at opposite ends of the transmission rollers for locating the transmission rollers spaced circumferentially apart about the coaxis and journaling the transmission rollers, and in which the transmission rollers include pinions meshed with a pinion on the shaft to cause the transmission rollers to turn about their own axes as they transmit motion between the internal and external screw threads.

3. An automotive vehicle steering system as claimed in claim 1 including a steering wheel that is turned to steer the wheels and that acts on the shaft via a steering column shaft and a steering gear, and in which the electric motor delivers torque that is converted to force acting on the shaft to augment the force imparted to the shaft by the steering column and steering gear.

4. An automotive vehicle steering system as claimed in claim 1 in which the transmission rollers comprise identical screw threads meshing with the internal and external screw threads, and in which the internal, external, and transmission roller screw threads all have the same number of threads per unit of axial length.

5. An automotive vehicle steering system as claimed in claim 1 including a steering wheel that is turned to steer the wheels via a transmitter that delivers electric signals to an electric controller that operates the electric motor to cause the shaft to translate in correlation with turning of the steering wheel to thereby steer the vehicle.

6. An automotive vehicle steering system comprising:
a right steered wheel, a left steered wheel, and a steering mechanism for steering the steered wheels in unison to steer the vehicle;
the steering mechanism comprising:
a housing that is disposed between the steered wheels and that comprises an interior enclosed by an axially extending side wall having opposite axial ends;
a shaft that has a longitudinal axis, that passes axially through the interior of the housing between opposite axial ends of the housing, and that has opposite axial ends that are exterior to the interior of the housing;
an electric motor comprising a rotor that is disposed within the interior of the housing for rotation about an axis that is coaxial with the shaft axis, the rotor comprising a cylindrical rotor tube which is open at opposite axial ends, through which the shaft coaxially passes, and which is rotatable about the coaxis of the shaft and rotor, the motor further comprising a stator for operating the rotor to rotate the rotor tube;
an internal formation on the rotor tube;
an external formation on the shaft;
a set of elements operatively coupling the internal formation and the external formation to provide for bi-directional motion transmission between the rotor tube and the shaft such that rotation of the rotor tube causes the shaft to move axially of the housing and axial motion of the shaft causes rotation of the rotor tube;
individual elements of the set being disposed circumferentially spaced apart about the coaxis of the shaft and rotor tube with the elements meshing with both the internal formation and the external formation and with the elements planetating about the coaxis as they transmit motion between the two formations;
a right steering coupling that couples one end of the shaft to the right steered wheel; and
a left steering coupling that couples the other end of the shaft to the left steered wheel.

7. An automotive vehicle steering system as claimed in claim 6, in which the elements comprise transmission rollers.

8. An automotive vehicle steering system as claimed in claim 7, in which the internal formation comprises a helical internal screw thread, the external formation comprises a helical external screw thread, and the transmission rollers comprise respective screw threads.

9. An automotive vehicle steering system as claimed in claim 8, in which the helical internal screw thread, the helical external screw thread, and the transmission roller screw threads all have the same number of threads per unit of axial length.

10. An automotive vehicle steering system as claimed in claim 7 including support rings disposed on the shaft at opposite ends of the transmission rollers for locating the transmission rollers spaced circumferentially apart about the coaxis and journaling the transmission rollers, and in which the transmission rollers include pinions meshed with a pinion on the shaft to cause the transmission rollers to planetate.
